# EUROPÄISCHE PATENTANMELDUNG

(11) **EP 2 028 362 A2**
(43) Veröffentlichungstag der Anmeldung: **25.02.2009**
(21) Anmeldenummer: 08014585.7
(22) Anmeldetag: 15.08.2008
(51) Int. Cl.: F02M 37/00, F02M 31/10

(54) **Kraftstofftemperaturregelung durch Ausnutzung der Systemträgheit**

(30) Priorität: 18.08.2007 DE 102007039114
(71) Anmelder: DEUTZ Aktiengesellschaft, 51149 Köln (DE)
(72) Erfinder: Zimmermann, Mark, 53332 Bornheim (DE)

(57) **Zusammenfassung**

Die Erfindung betrifft eine Brennkraftmaschine, insbesondere selbstzündende Brennkraftmaschine, die mit einem dickflüssigen Kraftstoff, insbesondere Rapsöl, betreibbar ist, wobei der Kraftstoff aus einem Tank über eine Kraftstoffleitung von einer Förderpumpe über einen Kraftstofffilter in eine Hochdruckpumpeneinrichtung förderbar ist und wobei der Kraftstoff von einer Heizvorrichtung aufheizbar ist sowie ein Verfahren zur Kraftstofftemperaturregelung einer derartigen Brennkraftmaschine.

Erfindungsgemäß werden eine Vorrichtung und ein Verfahren zu einer Kraftstofftemperaturregelung angegeben, mit dem bei geringem Energieaufwand eine zuverlässige und genaue Temperaturregelung möglich ist. Dies wird dadurch erreicht, dass die Heizeinrichtung ein in die Kraftstoffleitung 6 eingeschalteter Wärmetauscher 3 ist, der von einem wärmeübertragenden Kühlmedium der Brennkraftmaschine in Abhängigkeit von einem Kraftstofftemperatur-Sollwert 12 und einem Kraftstofftemperatur-Messwert ventilgeregelt durchströmt wird.

## Beschreibung

Die Erfindung betrifft eine Brennkraftmaschine, insbesondere selbstzündende Brennkraftmaschine, die mit einem dickflüssigen Kraftstoff, insbesondere Rapsöl, betreibbar ist, wobei der Kraftstoff aus einem Tank über eine Kraftstoffleitung von einer Förderpumpe über einen Kraftstofffilter in eine Hochdruckpumpeneinrichtung förderbar ist und wobei der Kraftstoff von einer Heizvorrichtung aufheizbar ist sowie ein Verfahren zur Kraftstofftemperaturregelung einer derartigen Brennkraftmaschine.

Eine solche Brennkraftmaschine ist aus der DE 38 00 585 bekannt. Bei dieser Brennkraftmaschine wird einer Kraftstoffhochdruckpumpe wahlweise Dieselkraftstoff oder Rapsöl zugeführt. Dabei ist es vorgesehen, das dickflüssige Rapsöl über eine elektrische Heizvorrichtung, die in dem Rapsöltank angeordnet ist, zu heizen. Da das Rapsöl vorteilhaft auf Temperaturen höher als 50 °C aufgeheizt werden soll ist folglich ein beträchtlicher Energieaufwand zum Aufheizen der gesamten in dem Tank mitgeführten Kraftstoffmenge erforderlich. Über eine Regelung zum Einregeln einer bestimmten vorgegebenen Temperatur ist nichts ausgeführt.

Der Erfindung liegt die Aufgabe zugrunde, eine Vorrichtung und ein Verfahren zu einer Kraftstofftemperaturregelung anzugeben, mit dem bei geringem Energieaufwand eine zuverlässige und genaue Temperaturregelung möglich ist.

Diese Aufgabe wird dadurch gelöst, dass die Heizeinrichtung ein in die Kraftstoffleitung eingeschalteter Wärmetauscher ist, der von einem wärmeübertragenden Kühlmedium der Brennkraftmaschine in Abhängigkeit von einem Kraftstofftemperatur-Sollwert und einem Kraftstofftemperatur-Messwert ventilgeregelt durchströmt wird. Zunächst einmal ist dadurch, dass die Heizeinrichtung ein in die Kraftleitung eingeschalteter Wärmetauscher ist, nur die Menge Kraftstoff zu erhitzen, die tatsächlich zur Hochdruckpumpeneinrichtung gefördert wird. Weiterhin steht die Wärmeenergie des Kühlmediums der Brennkraftmaschine als normalerweise über Wärmetauscher abzuführende Energie quasi ohne weiteren Energieaufwand zur Verfügung. Dadurch, dass schließlich der Durchfluss von dem Kühlmedium durch den Wärmetauscher ventilgeregelt durchströmt wird, ist eine einfache und präzise Einstellung eines Temperaturwertes des zu erwärmenden Kraftstoffs möglich.

In Weiterbildung der Erfindung ist das Ventil ein 2/2-Wegeventil. Ein solches Ventil ist kostengünstig und zuverlässig und durch die in weiterer Ausgestaltung vorgesehene getaktete Regelung des Ventils ist eine sehr genaue und zuverlässige Einstellung einer Temperatur möglich. Eine genaue Kraftstofftemperaturregelung ist eine entscheidende Komponente für den einwandfreien Betrieb einer mit Rapsöl betriebenen Brennkraftmaschine in den Punkten Leistung, Kraftstoffverbrauch und Emissionen. Das hier angewendete Prinzip für die genaue Kraftstofftemperaturregelung ist eine (langsame) Taktung (offen/geschlossen) des 2/2-Wegeventils, welches den Zustrom des warmen Kühlmediums in den Wärmetauscher regelt. Durch die erfindungsgemäße Ausgestaltung wird eine Ausnutzung der Trägheit der Wärmeabgabe des Wärmetauschers, des Kraftstoffvorfilters, der Kraftstoffpumpe und des Kraftstoffhauptfilters erreicht. Mit der niederfrequenten Taktung des 2/2-Wegeventils werden die einzelnen zuvor genannten Komponenten impulsweise mit aufgeheiztem Rapsöl erwärmt. In der Phase, in der das 2/2-Wegeventil geschlossen ist und folglich das Rapsöl nicht erhitzt wird, wird die in den Komponenten gespeicherte Wärme an das Rapsöl abgegeben. Somit ergibt sich im Mittel eine genau eingeregelte Temperatur an der Hochdruckpumpeneinrichtung. Die Hochdruckpumpeneinrichtung ist insbesondere als Common-Rail-System ausgelegt, wobei insbesondere zwei Hochdruckpumpen den Kraftstoff in ein Rail fördern. Die in das Rail geförderte Kraftstoffmenge wird bestimmt durch eine Kraftstoffzumesseinrichtung, die die den Hochdruckpumpen zugeführte Kraftstoffmenge bestimmt. Die in dieser Kraftstoffzumesseinrichtung herrschende Temperatur wird als Vorgabewert festgelegt. Diese Temperatur soll zwischen 60 °C und 65 °C, bevorzugt 62,5 °C, betragen. In diesem Temperaturbereich ist das Rapsöl genügend dünnflüssig, um problemlos in die einzelnen Brennräume der Brennkraftmaschine eingespritzt zu werden. Andererseits treten bei Temperaturen unterhalb von 65 °C noch (mit einer vorgegebenen geringen Toleranz) keine insbesondere mechanischen oder festigkeitsmäßigen Probleme mit den einzelnen Komponenten (Filtereinsätze usw.) auf. Dagegen würde bei einer grundsätzlich bekannten Zweipunktregelung eine Schwankung von bis zu 15 °C auftreten, die folglich zu Temperaturen bis ca. 80 °C führen würde.

In weiterer Ausgestaltung ist der Regler ein PI-Fensterregler. In einem PI-Fensterregler wird in Abhängigkeit von der Regelabweichung auf verschiedene Verstärkungsfaktoren von dem P-Anteil und dem I-Anteil des Reglers umgeschaltet. Außerhalb des Fensters wird sehr hart und ungenau in das Fenster hinein geregelt, was durch einen hohen P-Anteil und einen geringen I-Anteil des Reglers erreicht wird. Innerhalb des Fensters wird langsam und mit hoher Genauigkeit geregelt, was durch einen niedrigen P-Anteil und einen hohen I-Anteil des Reglers erreicht wird. Hierbei versteht es sich von selbst, dass der Sollwert möglichst genau mittig in dem Fenster liegen soll.

In weiterer Ausgestaltung ist der Kraftstofftemperatur-Sollwert in Abhängigkeit von zumindest einer Brennkraftmaschinen-Temperatur korrigierbar. Hierbei erfolgt insbesondere eine Korrektur des Kraftstofftemperatur-Sollwertes in Abhängigkeit von der Ladelufttemperatur und der Kühlmitteltemperatur der Brennkraftmaschine. Aus der ohnehin gemessenen Ladelufttemperatur kann problemlos auf die Umgebungstemperatur geschlossen werden und aus der ebenfalls für den Brennkraftmaschinenbetrieb benötigten Kühlmitteltemperatur wird auf die abgestrahlte Wärmemenge auf die Komponenten Kraftstoffvorfilter, Kraftstoffförderpumpe und Kraftstoffhauptfilter geschlossen. Für diese Korrektur ist also nur ein geringer Aufwand erforderlich.

In Weiterbildung der Erfindung ist ein Temperaturfühler zur Bestimmung des Kraftstofftemperatur-Messwertes direkt hinter dem Wärmetauscher in der Kraftstoffleitung angeordnet. Mit dieser Anordnung wird ein sehr gutes und genaues Regelungsergebnis erzielt.

In weiterer Ausgestaltung der Erfindung wird der Regelvorgang in einen Einregelvorgang, bei dem die Differenz zwischen dem Kraftstofftemperatur-Sollwert und dem Kraftstofftemperatur-Messwert einen Vorgabewert überschreitet, und einen Ausregelvorgang, bei dem die Differenz zwischen dem Kraftstofftemperatur-Sollwert und dem Kraftstofftemperatur-Messwert den Vorgabewert unterschreitet, aufgeteilt. Durch den solchermaßen aufgeteilten Regelvorgang kann insbesondere eine Schonung des 2/2-Wegeventils erreicht werden. Bei dem Einregelvorgang regelt der PI-Fensterregler das Wegeventil mit einer konstanten hohen Schaltfrequenz und danach, wenn der Vorgabewert erreicht ist, regelt der PI-Fensterregler das Wegeventil in dem Ausregelvorgang mit einer geringen Schaltfrequenz. Bei einer zu großen Abweichung von der Sollwert-Temperatur wird dann in weiterer Ausgestaltung wieder automatisch auf den Einregelvorgang umgeschaltet.

Wie zuvor ausgeführt ist, wird bevorzugt mit zwei unterschiedlichen Schaltfrequenzen geregelt, wobei jeweils bei einer der beiden Schaltfrequenzen die Schaltdauer variiert wird. Bei einer hohen Differenz zwischen dem Kraftstofftemperatur-Sollwert und dem Kraftstofftemperatur-Messwert wird die Schaltdauer auf einen hohen Wert - entsprechend einer langen Heizzeit - eingestellt, während bei einer geringen Differenz die Schaltdauer und dementsprechend die Heizzeit gering ist. Während des anfänglichen Aufheizens insbesondere bei Inbetriebnahme des Heizsystems wird das Ventil bis zu einem Vorgabewert dauernd geöffnet.

Die dargestellten einzelnen Strategien sind im Übrigen additiv in geeigneter Art und Weise miteinander verknüpft.

Weitere vorteilhafte Ausgestaltungen der Erfindung sind der Zeichnungsbeschreibung zu entnehmen, in der ein in den Figuren dargestelltes Ausführungsbeispiel der Erfindung näher beschrieben ist.

### Es zeigen:

- Fig. 1: einen Auszug des Schaltschemas der dickflüssigen Kraftstoffversorgung der Brennkraftmaschine,
- Fig. 2: in Diagrammform die Temperatureinregelung in ein Fenster eines PI-Fensterreglers,
- Fig. 3: in Diagrammform der Zusammenhang zwischen Schaltfrequenz und Schaltdauer und
- Fig. 4: in Diagrammform die Aufteilung des Regelvorgangs in unterschiedliche Abschnitte

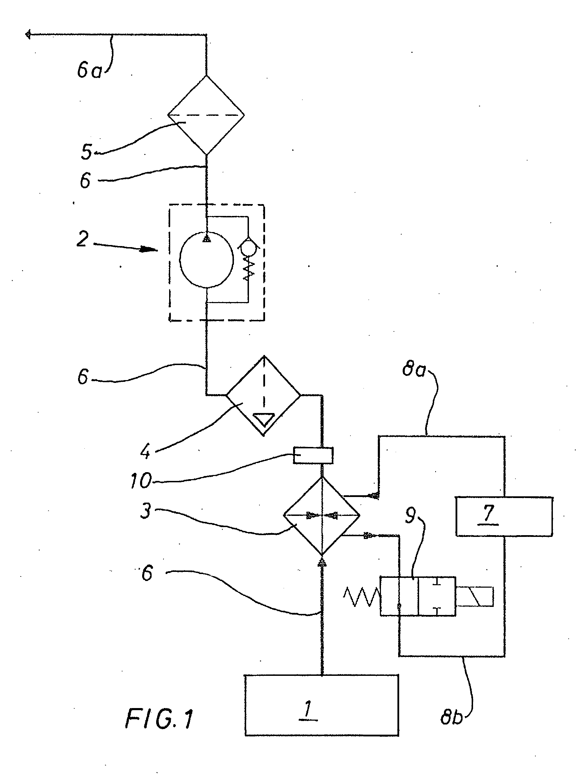

Fig. 1 zeigt einen Auszug aus einem Schaltschema zur Zuführung von einem dickflüssigen Kraftstoff, insbesondere Rapsöl, zu einer Hochdruckpumpeneinrichtung einer Brennkraftmaschine. Die Brennkraftmaschine kann ausschließlich mit dickflüssigem Kraftstoff betrieben werden, wird aber bevorzugt zum Starten, zum Abstellen und zum Betrieb im niedrigen Teillastbereich mit einem dünnflüssigen Kraftstoff, insbesondere Dieselkraftstoff, betrieben. Für den zweiten Fall ist ausgangsseitig eines in Fig. 1 dargestellten Kraftstoffleitungs-abschnittes 6a ein Schaltventil vorgesehen, das den geförderten dickflüssigen Kraftstoff entweder über eine Ausgangsleitung weiter zu der Hochdruckpumpeneinrichtung oder zurück in einen Kraftstofftank 1 fördert. Der dünnflüssige Kraftstoff wird über eine bedarfsweise betriebene Pumpe über ein Rückschlagventil in die Ausgangsleitung des Schaltventils eingespeist. Für diesen Fall fördert dann eine in dem in Fig. 1 dargestellten Kraftstoffsystem vorhandene und dauernd betriebene Förderpumpe 2 den Kraftstoff über das Schaltventil zurück in den Kraftstofftank 1. Bei einer Versorgung der Hochdruckpumpeneinrichtung mit dickflüssigem Kraftstoff wird die elektrische Förderpumpe zur Förderung des dünnflüssigen Kraftstoffs abgestellt. Die Hochdruckpumpeneinrichtung ist insbesondere ein Common-Rail-System, bei der zwei Hochdruckpumpen über eine eingangsseitige Mengensteuereinrichtung den Kraftstoff in ein Rail fördern. Diesem Rail entnehmen die einzelnen Kraftstoffeinspritzventile von einer elektronischen Motorsteuerung gesteuert die jeweils benötigte und in die einzelnen Brennräume einzuspritzende Kraftstoffmenge. Weiterhin ist dem Hochdruckpumpensystem ein Leckageleitungssystem mit Umschaltventil zugeordnet, das den Leckagekraftstoff bzw. abgesteuerten Kraftstoff in den je nach Kraftstoffart zugehörigen Tank zurückführt.

Zurückkommend auf den Schaltkreis gemäß Fig. 1 wird der dickflüssige Kraftstoff von der Förderpumpe 2 aus dem Kraftstofftank 1 durch einen Wärmetauscher 3 über einen Vorfilter 4 und einen Hauptfilter 5 durch entsprechende Kraftstoffleitungsabschnitte 6, 6a dem nicht dargestellten Schaltventil zugeführt.

Der Wärmetauscher ist ventilgeregelt von einem wärmeübertragenden Kühlmedium der Brennkraftmaschine durchströmt. Schematisch ist das Kühlsystem 7 der Brennkraftmaschine dargestellt, von dem durch eine Kühlmittelzuführleitung 8a das Kühlmittel, das im Übrigen insbesondere Kühlwasser oder Kühlöl ist, zu dem Wärmetauscher 3 und von diesem durch eine Kühlmittelrückführleitung 8b wieder zurück zu dem Kühlsystem 7 der Brennkraftmaschine geleitet wird. In die Kühlmittelrückführleitung 8b ist ein Ventil 9 eingeschaltet. Dieses Ventil 9, das als 2/2-Wegeventil ausgebildet ist, ist zwischen einer Sperrstellung, in der die Strömungsverbindung in der Kühlmittelrückführleitung 8b unterbrochen ist, und einer dargestellten Durchlassstellung umschaltbar. Die Umschaltung je nach Erfordernis veranlasst durch ein elektronisches Steuergerät, das Bestandteil der zuvor erwähnten Motorsteuerung sein kann. Diesem Steuergerät wird neben anderen Parametern insbesondere die von einem Kraftstofftemperatursensor 10 ermittelte Kraftstofftemperatur zugeführt, wobei der Kraftstofftemperatursensor 10 direkt ausgangsseitig aus dem Wärmetauscher 3 in den Kraftstoffleitungsabschnitt 6a eingesetzt ist.

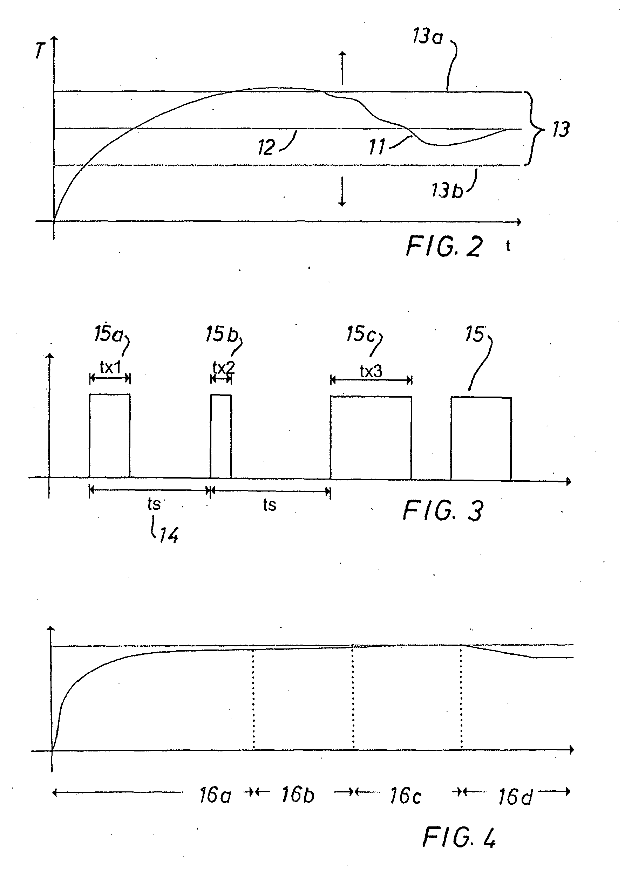

Bestandteil des Steuergerätes ist insbesondere ein sogenannter PI-Fensterregler, dessen grundsätzliche Arbeitsweise anhand einer Temperatureinregelung gemäß Fig. 2 erläutert wird. Über der Zeit t ist der Temperaturverlauf 11 dargestellt, der auf einen Temperatur Soll-Wert 12 eingeregelt werden. Dies erfolgt mit dem PI-Fensterregler, der ein den Soll-Wert 12 umfassendes Fenster 13 aufweist, das von einer positiven Fenstergrenze 13a und einer negativen Fenstergrenze 13b begrenzt ist. Außerhalb dieses Fensters 13 regelt der PI-Fensterregler sehr hart in das Fenster hinein. In diesem Fall ist der P-Anteil hoch und der I-Anteil gering. Innerhalb des Fensters 13 wird langsam und mit hoher Genauigkeit geregelt, entsprechend ist der P-Anteil niedrig und der I-Anteil hoch.

In Fig. 3 ist in Diagrammform der Zusammenhang zwischen Schaltfrequenz und Schaltdauer dargestellt. Zunächst einmal wird während eines so bezeichneten Einregelvorgangs (siehe Fig. 4) die Schaltfrequenz 14 des PI-Fensterreglers auf einen Wert (ts) konstant und die Schaltdauer beziehungsweise Heizzeit 15, 15a, 15b, 15c als Änderungsgröße auf unterschiedliche Werte (tx) entsprechend der erforderlichen Aufheizung eingestellt. Dabei stellt der PI-Fensterregler die Heizzeit 15, 15a, 15b, 15c in Abhängigkeit von der Differenz der tatsächlichen Kraftstofftemperatur von dem Sollwert 12 ein. Bei hoher Differenz wird die Heizzeit 15c sehr hoch eingestellt, während bei niedriger Differenz eine geringe Heizzeit 15b eingestellt wird. Ist der Sollwert 12 in etwa erreicht, wird eine mittlere Heizzeit 15a eingestellt. Der Wärmetauscher 3 und die nachfolgenden Komponenten, insbesondere der Vorfilter 4, der Hauptfilter 5 und die Förderpumpe 2 glätten das Signal, im vorliegenden Fall also die Temperatur, so dass in dem ausgangsseitigen Leitungsabschnitt 6a eine nahezu konstante Temperatur anliegt. Weicht die Temperatur nur gering von dem Sollwert 12 ab, so wird während eines so bezeichneten Ausregelungsvorgangs die Schaltfrequenz 14 verringert. Beträgt die Schaltfrequenz 14 während des Einregelvorgangs beispielsweise (ts) = 5 Sekunden, wird während des Ausregelvorgangs die Schaltfrequenz auf einen Wert (x ts) verringert. Diese Verringerung der Schaltfrequenz wird durchgeführt, um die Lebensdauer des Ventils 9 zu erhöhen.

In Fig. 4 sind zusammenfassend die verschiedenen Regelungsvorgänge dargestellt. Während einer ersten Phase 16a ist das Ventil 9 dauernd geöffnet und der Wärmetauscher 3 wird dauernd von Kühlmedium durchströmt und dementsprechend entspricht die Heizzeit 15 der Schaltfrequenz 14. In der zweiten Phase 16b findet der zuvor erläuterte Einregelungsvorgang statt. Ist der Temperatur Soll-Wert 12 nahezu erreicht, wird in der Phase 16c während des ebenfalls zuvor erläuterten Ausregelvorgangs die Schaltfrequenz 14 verringert. Weicht in einer späteren Phase 16c die Temperatur wieder weiter von dem Sollwert 12 ab, wird die Schaltfrequenz wieder auf 5 Sekunden erhöht, um schnellstmöglich die Temperaturdifferenz zu verringern.

Bezugszeichen
- 1: Kraftstofftank
- 2: Förderpumpe
- 3: Wärmetauscher
- 4: Vorfilter
- 5: Hauptfilter
- 6, 6a: Kraftstofffeitungsabschnitt
- 7: Kühlsystem
- 8a: Kühlmittelzuführfeitung
- 8b: Kühlmittelrückführleitung
- 9: Ventil
- 10: Kraftstofftemperatursensor
- 11: Temperaturverlauf
- 12: Temperatur Soll-Wert
- 13: Fenster
- 13a: positive Fenstergrenze
- 13b: negative Fenstergrenze
- 14: Schaltfrequenz
- 15 - 15c: Heizzeit
- 16: Phase

## Patentansprüche

1. Brennkraftmaschine, insbesondere selbstzündende Brennkraftmaschine, die mit einem dickflüssigen Kraftstoff, insbesondere Rapsöl, betreibbar ist, wobei der Kraftstoff aus einem Tank über eine Kraftstoffleitung von einer Förderpumpe über einen Kraftstofffilter in eine Hochdruckpumpeneinrichtung förderbar ist und wobei der Kraftstoff von einer Heizvorrichtung aufheizbar ist,
***dadurch gekennzeichnet, dass*** die Heizeinrichtung ein in die Kraftstoffleitung (6, 6a) eingeschalteter Wärmetauscher (3) ist, der von einem wärmeübertragenden Kühlmedium der Brennkraftmaschine in Abhängigkeit von einem Kraftstofftemperatur-Sollwert (12) und einem Kraftstofftemperatur-Messwert ventilgeregelt durchströmt wird.

2. Brennkraftmaschine nach Anspruch 1,
***dadurch gekennzeichnet, dass*** das Ventil (9) ein 2/2-Wegeventil ist.

3. Brennkraftmaschine nach einem der vorherigen Ansprüche,
***dadurch gekennzeichnet, dass*** das Ventil (9) getaktet geregelt wird.

4. Brennkraftmaschine nach einem der vorherigen Ansprüche,
***dadurch gekennzeichnet, dass*** der Regler ein PI-Fensterregler ist.

5. Brennkraftmaschine nach einem der vorherigen Ansprüche,
***dadurch gekennzeichnet, dass*** der Kraftstofftemperatur-Sollwert (12) in Abhängigkeit von zumindest einer Brennkraftmaschinentemperatur korrigierbar ist.

6. Brennkraftmaschine nach einem der vorherigen Ansprüche,
***dadurch gekennzeichnet, dass*** ein Temperaturfühler (10) zur Bestimmung des Kraftstofftemperatur-Messwertes direkt hinter dem Wärmetauscher (9) in der Kraftstoffleitung (6) angeordnet ist.

7. Verfahren zur Kraftstofftemperaturregelung einer Brennkraftmaschine, insbesondere selbstzündende Brennkraftmaschine, die mit einem dickflüssigen Kraftstoff, insbesondere Rapsöl, betreibbar ist, wobei der Kraftstoff aus einem Tank über eine Kraftstoffleitung von einer Förderpumpe über einen Kraftstofffilter in eine Hochdruckpumpeneinrichtung förderbar ist und wobei der Kraftstoff von einer Heizvorrichtung aufheizbar ist,
***dadurch gekennzeichnet, dass*** als Heizeinrichtung in die Kraftstoffleitung (6) ein Wärmetauscher (3) eingeschaltet ist, der von einem wärmeübertragenden Kühlmedium der Brennkraftmaschine in Abhängigkeit von einem Kraftstofftemperatur-Sollwert (12) und einem Kraftstofftemperatur-Messwert ventilgeregelt durchströmt wird.

8. Verfahren nach Anspruch 7,
***dadurch gekennzeichnet, dass*** das als 2/2-Wegeventil ausgebildete Ventil (9) von einem PI-Fensterregler geregelt wird.

9. Verfahren nach Anspruch 7 oder 8,
***dadurch gekennzeichnet, dass*** der Regelvorgang in einen Einregelvorgang, bei dem die Differenz zwischen dem Kraftstofftemperatur-Sollwert (12) und dem Kraftstofftemperatur-Messwert einen Vorgabewert überschreitet, und einen Ausregelvorgang, bei dem die Differenz zwischen dem Kraftstofftemperatur-Sollwert und dem Kraftstofftemperatur-Messwert den Vorgabewert unterschreitet, aufgeteilt ist.

10. Verfahren nach Anspruch 9,
***dadurch gekennzeichnet, dass*** der PI-Fensterreglers während des Einregelungsvorgangs und des Ausregelvorgangs jeweils mit konstanter Schaltfrequenz (14) regelt.

11. Verfahren nach Anspruch 10,
***dadurch gekennzeichnet, dass*** bei konstanter Schaltfrequenz (14) die Schaltdauer variiert wird.
